# EUROPÄISCHE PATENTSCHRIFT

(11) **EP 3 903 596 B1**
(45) Veröffentlichungstag und Bekanntmachung des Hinweises auf die Patenterteilung: **12.06.2024**
(21) Anmeldenummer: 21155166.8
(22) Anmeldetag: 04.02.2021
(51) Int. Cl.: A23G 3/08, A23G 7/02

(54) **NAHRUNGSMITTELVERARBEITUNGSMASCHINE MIT WÄRMETAUSCHER-SCHNELLWECHSELEINRICHTUNG**
FOOD PROCESSING MACHINE WITH HEAT EXCHANGER QUICK CHANGE DEVICE
MACHINE DE TRAITEMENT DES DENRÉES ALIMENTAIRES POURVUE DE DISPOSITIF DE CHANGEMENT RAPIDE D'ÉCHANGEUR DE CHALEUR

(30) Priorität: 28.04.2020 DE 102020111506
(43) Veröffentlichungstag der Anmeldung: 03.11.2021
(73) Patentinhaber: Sollich KG, 32105 Bad Salzuflen (DE)
(72) Erfinder: König, Maximilian, 32108 Bad Salzuflen (DE); Geuken, Michael, 33818 Leopoldshöhe (DE); Bläsing, Rüdiger, 33613 Bielefeld (DE); Barner, Detlef, 32479 Hille (DE)
(74) Vertreter: REHBERG HÜPPE + PARTNER

(56) Entgegenhaltungen:
- EP-A1- 1 521 029
- DE-A1-102011 122 062
- DE-U1-202005 004 411
- Verheijen Richard ET AL: "buisrailwagen - Riverco", , 8. Januar 2020 (2020-01-08), Seiten "1-5, XP055820551, Gefunden im Internet: URL:https://www.riverco.nl/product/buisrai lwagen/ [gefunden am 2021-07-02]

## Beschreibung

### TECHNISCHES GEBIET DER ERFINDUNG

Die Erfindung betrifft eine Nahrungsmittelverarbeitungsmaschine mit einem Gehäuse und einem in dem Gehäuse angeordneten Wärmetauscher zum temperaturmäßigen Behandeln von Nahrungsmittelprodukten in der Nahrungsmittelverarbeitungsmaschine.

Die Nahrungsmittelverarbeitungsmaschine dient zum industriellen oder zumindest handwerklichen professionellen Herstellen von Nahrungsmitteln. Es geht um eine möglichst weitgehend automatisierte Herstellung und z. B. nicht um Handarbeit im Bereich der Hobbyköche.

Bei der Nahrungsmittelverarbeitungsmaschine kann es sich insbesondere um einen Kühltunnel zum Abkühlen erwärmter Süßwarenprodukten handeln, auf die zuvor beispielsweise ein flüssiger Schokoladeüberzug aufgebracht wurde. Es kann sich aber auch um andere Anwendungsgebiete handeln, bei denen die Temperatur und ggf. der Feuchtegehalt im Zusammenhang mit der industriellen Verarbeitung von Lebensmitteln beeinflusst wird.

### STAND DER TECHNIK

Eine Nahrungsmittelverarbeitungsmaschine zum Erwärmen, Kühlen oder Trocknen von Nahrungsmittelprodukten ist aus dem deutschen Gebrauchsmuster DE 20 2005 004 411 U1 bekannt. Die Nahrungsmittelprodukte werden auf einer Fördereinrichtung längs durch ein Gehäuse der Nahrungsmittelverarbeitungsmaschine transportiert. Die Nahrungsmittelverarbeitungsmaschine weist ein Kühl- oder Heizmodul bestehend aus einem Ansaugkanal, einem Lüfter mit Antrieb und einer Druckkammer auf. Gemäß einer Ausführungsform, die nicht in den Zeichnungen dargestellt ist, (siehe Absatz [0019]) ist das Modul auf einer auf Rädern gelagerten Grundplatte befestigt. Für eine Reinigung und Wartung des Moduls werden zunächst dessen elektrische Verbindungen gelöst. Anschließend wird das Modul seitlich - d. h. in einer Richtung, die senkrecht zu der Förderrichtung verläuft - aus der Nahrungsmittelverarbeitungsmaschine herausgerollt und z. B. in einen anderen Raum gefahren, in dem die Reinigung und/oder Wartung des Moduls erfolgt.

Ein Wärmetauscher u. a. für die Lebensmittelverarbeitung ist aus der deutschen Patentanmeldung DE 43 33 904 A1 bekannt. Der Wärmetauscher weist ein Gehäuse auf, in das die Wärmetauscherplatten eingeschoben und wieder entnommen werden können.

Ein Wärmetauscher als Teil eines Kühlkanals u. a. für die Lebensmittelverarbeitung ist aus der deutschen Patentanmeldung DE 10 2011 122 062 A1 bekannt. Der Wärmetauscher kann an der Oberseite des Kühlkanals befestigt sein, um einen einfachen Einbau und Ausbau zu ermöglichen.

Ein Rohrschienenwagen für den Bereich des Gartenbaus ist auf der Internetseite www.riverco.nl/product/buisrailwagen gezeigt. Ob die Veröffentlichung tatsächlich wie angegeben am 08.01.2020 erfolgt ist, müsste noch belegt werden.

### AUFGABE DER ERFINDUNG

Der Erfindung liegt die Aufgabe zugrunde, eine Nahrungsmittelverarbeitungsmaschine mit einem Wärmetauscher bereitzustellen, bei der der Wärmetauscher in einfacher und effizienter Weise gereinigt werden kann.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Nahrungsmittelverarbeitungsmaschine mit einem Gehäuse und einem in dem Gehäuse angeordneten Wärmetauscher zum temperaturmäßigen Behandeln von Nahrungsmittelprodukten in der Nahrungsmittelverarbeitungsmaschine. Die Nahrungsmittelverarbeitungsmaschine weist eine Schnellwechseleinrichtung für den Wärmetauscher auf.

Bei der Nahrungsmittelverarbeitungsmaschine handelt es sich um eine in der industriellen oder zumindest professionellen handwerklichen Herstellung von Nahrungsmitteln eingesetzte Maschine, die mittels Wärmeenergie Einfluss auf die Eigenschaften der Nahrungsmittel nimmt.

Bei den Nahrungsmittelprodukten kann es sich beispielsweise um Süßwarenprodukte, Backwaren, Tiefkühlprodukte, Brot, Knäckebrot oder auch Tierfutter handeln. Die Produkte werden gekühlt, erwärmt, temperaturmäßig konstant gehalten, getrocknet und/oder befeuchtet. Ein typisches Beispiel ist das Abkühlen von Süßwarenprodukten, die in einer Überziehmaschine mit einem flüssigen Schokoladeüberzug versehen wurden, in einem Kühlkanal. Ein anderes Beispiel ist das Gären von Knäckebrot.

In solchen Nahrungsmittelverarbeitungsmaschinen ist das für das Bereitstellen der Wärmeenergie zentrale Bauelement ein Wärmetauscher. Dabei handelt es sich z. B. um einen Lamellenwärmetauscher. Ein solcher Wärmetauscher weist aufgrund seiner Lamellen eine große Oberfläche auf, die je nach Größe des Wärmetauschers durchaus etwa 150 m² und mehr betragen kann. An dieser insbesondere metallischen Oberfläche des Wärmetauschers setzt sich außen häufig Luftfeuchtigkeit ab, woraus die Gefahr des Entstehens von Schimmel resultiert. Wenn dann durch die in der Nahrungsmittelverarbeitungsmaschine eingesetzten Lüfter durch den Schimmel auf dem Wärmetauscher kontaminierte Umgebungsluft auf die Nahrungsmittelprodukte fördern, ergibt sich eine entsprechende Gesundheitsgefährdung bzw. Nichtverwendbarkeit der kontaminierten Nahrungsmittelprodukte.

Aus diesem Grund wäre es nach der Erkenntnis der Anmelderin erforderlich, das Äußere des Wärmetauschers regelmäßig einer gründlichen Reinigung zuzuführen. Der Wärmetauscher ist aber bei bisherigen Nahrungsmittelverarbeitungsmaschinen nur schwer oder gar nicht erreichbar. Es müssten zunächst andere Teile der Heiz- oder Kühleinrichtung - insbesondere die den Luftstrom erzeugenden Elemente - entfernt werden. Der Wärmetauscher befindet sich dann aber immer noch schwer erreichbar im Inneren der Nahrungsmittelverarbeitungsmaschine. Wenn der Wärmetauscher dort gereinigt würde, bestünde die Gefahr der Kontaminierung weiterer Teile der Nahrungsmittelverarbeitungsmaschine. Aus diesen Gründen wird im Stand der Technik keine Reinigung des Wärmetauschers durchgeführt.

Aufgrund der hohen Masse des Wärmetauschers - die je nach Größe durchaus etwa 200 kg oder mehr betragen kann - lässt sich der Wärmetauscher auch nur schwer bewegen. Zudem ist dabei große Vorsicht geboten, da die Lamellen des Wärmetauschers empfindlich sind und leicht beschädigt werden können. Selbst wenn es gelingt, den Wärmetauscher ohne gesundheitliche Beeinträchtigung des Servicepersonals und ohne Beschädigung des Wärmetauschers aus der Nahrungsmittelverarbeitungsmaschinen zu entfernen, ist dieser Vorgang sehr zeitaufwändig, da zuvor die Wasserleitungen sauber getrennt und andere mechanische Verbindungen des Wärmetauschers gelöst werden mussten.

Die neue Nahrungsmittelverarbeitungsmaschine löst all diese Probleme nun durch eine Wärmetauscher-Schnellwechseleinrichtung. Die Wärmetauscher-Schnellwechseleinrichtung ist so ausgebildet, dass durch ihre Betätigung der Wärmetauscher von der Nahrungsmittelverarbeitungsmaschine trennbar und später wieder mit dieser verbindbar ist.

Mittels der Schnellwechseleinrichtung kann der Wärmetauscher in schneller, einfacher, schonender und effizienter Weise von dem Rest der Nahrungsmittelverarbeitungsmaschine entkoppelt werden. Dadurch wird die Relativbewegung des Wärmetauschers zum Rest der Nahrungsmittelverarbeitungsmaschine ermöglicht - d. h. der Wärmetauscher kann von dem Rest der Nahrungsmittelverarbeitungsmaschine weg bewegt und an einen anderen Ort transportiert werden. An diesem anderen Ort kann dann die Reinigung und ggf. Wartung oder Reparatur des Wärmetauschers durchgeführt werden. Anschließend wird der Wärmetauscher zu der Nahrungsmittelverarbeitungsmaschine zurückgebracht und mittels der Schnellwechseleinrichtung wieder mit dieser verbunden. Nun kann der Betrieb der Nahrungsmittelverarbeitungsmaschine fortgesetzt werden.

Die Nahrungsmittelverarbeitungsmaschine kann ein Fördermittel aufweisen, mit dem die Nahrungsmittelprodukte in einer Förderrichtung durch die Nahrungsmittelverarbeitungsmaschine gefördert werden. Eine Nahrungsmittelverarbeitungsmaschine weist meist ein Unterteil und ein Oberteil mit jeweils einem Gehäuse auf. In dem Unterteil ist der Wärmetauscher angeordnet. In dem Oberteil befindet sich der Temperierraum, durch den die Nahrungsmittelprodukte gefördert werden. Bei einem Kühlkanal entspricht die Förderrichtung der Längsrichtung der Nahrungsmittelverarbeitungsmaschine.

Das Gehäuse des Oberteils weist einen Eingang und einen Ausgang für die Nahrungsmittelprodukte auf. Die Nahrungsmittel werden in einem von dem Eingang zum Ausgang weisenden Förderrichtungssinn durch das Gehäuse gefördert und dabei temperaturmäßig behandelt. Bei dem Fördermittel kann es sich insbesondere um ein umlaufendes Förderband oder ein umlaufendes Fördergitter handeln.

Der Wärmetauscher kann in der Förderrichtung aus dem Gehäuse des Unterteils entfernbar ausgebildet und angeordnet sein. Dies bedeutet, dass der Wärmetauscher entweder in dem Förderrichtungssinn oder entgegengesetzt zum Förderrichtungssinn von dem Gehäuse des Unterteils der Nahrungsmittelverarbeitungsmaschine entfernt wird. Hierdurch ist es möglich, im Wesentlichen nur den Wärmetauscher und keine oder nur wenige weitere Komponenten der Nahrungsmittelverarbeitungsmaschine zu demontieren.

Der Wärmetauscher kann eine Mehrzahl von Rollen aufweisen, mittels derer der Wärmetauscher in der Förderrichtung relativ zu dem Gehäuse beweglich gelagert ist. Hierdurch wird die Relativbewegung zwischen dem Wärmetauscher und der Nahrungsmittelverarbeitungsmaschine wesentlich erleichtert. Ein Bediener kann den Wärmetauscher daher trotz dessen hohen Gewichts mit einer Hand bewegen. Bei den Rollen kann es sich um Rolleneinrichtungen, Räder, Kugellager usw. handeln. Über die Rollen stützt sich der Wärmetauscher nach unten ab. Die Rollen sind daher insbesondere an der Unterseite des Wärmetauschers montiert.

Die Schnellwechseleinrichtung kann so ausgebildet sein, dass der Wärmetauscher werkzeuglos von dem Gehäuse trennbar und mit diesem verbindbar ist. Hierdurch wird die Montage und Demontage des Wärmetauschers vereinfacht und beschleunigt. Es ist aber auch möglich, dass zumindest bei einem Teil der Montage und Demontage einfaches Werkzeug eingesetzt wird. Ziel ist es, die Montage und Demontage so einfach zu halten, dass sie effektiv und ohne besondere Vorkenntnisse des Servicemitarbeiters ausgeführt werden kann.

Die Schnellwechseleinrichtung kann eine in dem Gehäuse angeordnete (erste) Schieneneinrichtung aufweisen, entlang derer der Wärmetauscher beweglich ist. Wenn der Wärmetauscher in der der Längsrichtung des Gehäuses entsprechenden Förderrichtung aus dem Gehäuse entfernt wird, kann der Wärmetauscher also in dieser Richtung entlang der Schieneneinrichtung definiert bewegt werden. Hierdurch ist die gewünschte Relativbewegung einfach und sicher möglich. Der Kraftaufwand ist reduziert und, aufgrund des durch die Schieneneinrichtung begrenzten Freiheitsgrads, ist eine Fehlbewegung und somit eine Beschädigung des Wärmetauschers ausgeschlossen.

Die Schieneneinrichtung kann zwei Schienen aufweisen. Dabei kann es sich insbesondere um L-förmig ausgebildete Schienen handeln, wobei der Wärmetauscher zwischen den Schienen aufgenommen ist. In dieser Weise wird die definierte, sichere und einfache Bewegung des Wärmetauschers relativ zu dem Rest der Nahrungsmittelverarbeitungsmaschine ermöglicht. Es ist aber auch möglich, andere Ausgestaltungen der Schieneneinrichtung zu wählen.

Die Nahrungsmittelverarbeitungsmaschine kann einen Servicewagen aufweisen, der zur Aufnahme und zum Transport des Wärmetauschers ausgebildet ist. Der Servicewagen weist insbesondere Rollen oder Räder und einen Bediengriff auf, so dass sich der Servicewagen mit dem darauf abgelegten Wärmetauscher durch einen Bediener einfach und sicher von der Nahrungsmittelverarbeitungsmaschine zu einem anderen Ort verfahren lässt. Der Servicewagen ist insbesondere ein spezielles innerbetriebliches Flurförderzeug.

Die Schnellwechseleinrichtung kann eine in dem Gehäuse angeordnete erste Schieneneinrichtung aufweisen. Darunter ist die oberhalb beschriebene Schieneneinrichtung zu verstehen. Der Servicewagen kann eine zweite Schieneneinrichtung aufweisen, die passend zu der ersten Schieneneinrichtung ausgebildet ist. Die beiden Schieneneinrichtungen können durch ein Schieneneinrichtungsverbindungsmittel miteinander verbunden werden. Das Schieneneinrichtungsverbindungsmittel kann z. B. als Sicherungsstift ausgebildet sein, der in eine Bohrung eingreift, die sich durch einen überlappenden Bereich der Schienen der ersten und zweiten Schieneneinrichtung erstreckt. Hierdurch ist eine Schieneneinrichtungseinheit gebildet. Der Wärmetauscher ist dann entlang der Schieneneinrichtungseinheit beweglich. In dieser Weise kann der Wärmetauscher von der Nahrungsmittelverarbeitungsmaschine auf den Servicewagen und umgekehrt einfach und sicher verbracht werden.

Der Wärmetauscher weist einen Eingang und einen Ausgang für ein durch den Wärmetauscher strömendes Fluid, insbesondere Wasser, auf. Der Eingang ist mittels einer ersten Schnellkupplung mit einer Zuführleitung und der Ausgang mittels einer zweiten Schnellkupplung mit einer Rückführleitung verbunden. Die erste Schnellkupplung und die zweite Schnellkupplung sind Teil der Schnellwechseleinrichtung. Die Schnellwechseleinrichtung beinhaltet also nicht nur den zuvor beschriebenen Aspekt der Relativbewegung zwischen dem Wärmetauscher und der Nahrungsmittelverarbeitungsmaschine. Sie beinhaltet zusätzlich den Aspekt der vorbereitenden Ermöglichung dieser Relativbewegung. Hierzu ist eine Entkopplung des Wärmetauschers von seinen Anschlüssen und mechanischen Verbindungen erforderlich. Die Schnellkupplungen gestatten das Trennen von und Verbinden mit der Fluidversorgung in komfortabler Weise.

Die erste Schnellkupplung und die zweite Schnellkupplung können als tropffreie Kupplungen ausgebildet sein. Solche tropffreien Kupplungen ermöglichen das schnelle und einfache Trennen und Verbinden der entsprechenden Fluidleitungen. Dabei tritt kein Fluid oder nur eine vernachlässigbare Menge des Fluids aus den Fluidleitungen aus. Beispiele konkreter Ausführungsformen derartiger Schnellkupplungen sind aus der europäischen Patentanmeldung EP 1 521 029 A1 bekannt, auf die hiermit verwiesen wird.

Die Nahrungsmittelverarbeitungsmaschine kann als Kühlkanal ausgebildet sein. Bei den Nahrungsmittelprodukten kann es sich um Süßwarenprodukte handeln. Es ist aber ebenfalls möglich, dass es sich um eine andere Art einer Nahrungsmittelverarbeitungsmaschine und eine andere Art von Nahrungsmittelprodukten oder Tierfutter handelt.

Die Erfindung betrifft weiterhin eine Kombination aus einer Nahrungsmittelverarbeitungsmaschine mit einem Wärmetauscher mit einem oder mehreren der oberhalb beschriebenen Merkmale und einem Servicewagen zur Aufnahme und zum Transport des Wärmetauschers. Die Nahrungsmittelmaschine weist eine erste Schieneneinrichtung auf. Der Servicewagen weist eine zweite Schieneneinrichtung auf, die passend zu der ersten Schieneneinrichtung ausgebildet ist, wobei der Wärmetauscher entlang der ersten Schieneneinrichtung und der zweiten Schieneneinrichtung und somit zwischen der Nahrungsmittelverarbeitungsmaschine und dem Servicewagen beweglich ist.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Gehäuse die Rede ist, ist dies so zu verstehen, dass genau ein Gehäuse, zwei Gehäuse oder mehr Gehäuse vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische Ansicht einer beispielhaften Ausführungsform einer neuen Nahrungsmittelverarbeitungsmaschine.
- **Fig. 2**: zeigt eine perspektivische Ansicht eines Teils der Nahrungsmittelverarbeitungsmaschine gemäß Fig. 1 mit einem Wärmetauscher.
- **Fig. 3**: zeigt eine weitere perspektivische Ansicht des Teils der Nahrungsmittelverarbeitungsmaschine.
- **Fig. 4**: zeigt eine weitere perspektivische Ansicht des Teils der Nahrungsmittelverarbeitungsmaschine.
- **Fig. 5**: zeigt eine perspektivische Ansicht einer beispielhaften Ausführungsform eines Servicewagens.
- **Fig. 6**: zeigt eine perspektivische Ansicht einer Kombination des Teils der Nahrungsmittelverarbeitungsmaschine gemäß Fig. 4 und des Servicewagens gemäß Fig. 5 in einer ersten Stellung.
- **Fig. 7**: zeigt eine perspektivische Ansicht einer Kombination des Teils der Nahrungsmittelverarbeitungsmaschine gemäß Fig. 4 und des Servicewagens gemäß Fig. 5 in einer zweiten Stellung.
- **Fig. 8**: zeigt eine weitere perspektivische Ansicht der Kombination des Teils der Nahrungsmittelverarbeitungsmaschine gemäß Fig. 4 und des Servicewagens gemäß Fig. 5 in der zweiten Stellung.
- **Fig. 9**: zeigt eine perspektivische Ansicht einer Kombination des Teils der Nahrungsmittelverarbeitungsmaschine gemäß Fig. 4 und des Servicewagens gemäß Fig. 5 in einer dritten Stellung.
- **Fig. 10**: zeigt eine weitere perspektivische Ansicht der Kombination des Teils der Nahrungsmittelverarbeitungsmaschine gemäß Fig. 4 und des Servicewagens gemäß Fig. 5 in der dritten Stellung.
- **Fig. 11**: zeigt eine perspektivische Ansicht des Servicewagens gemäß Fig. 5 mit aufliegendem Wärmetauscher.

### FIGURENBESCHREIBUNG

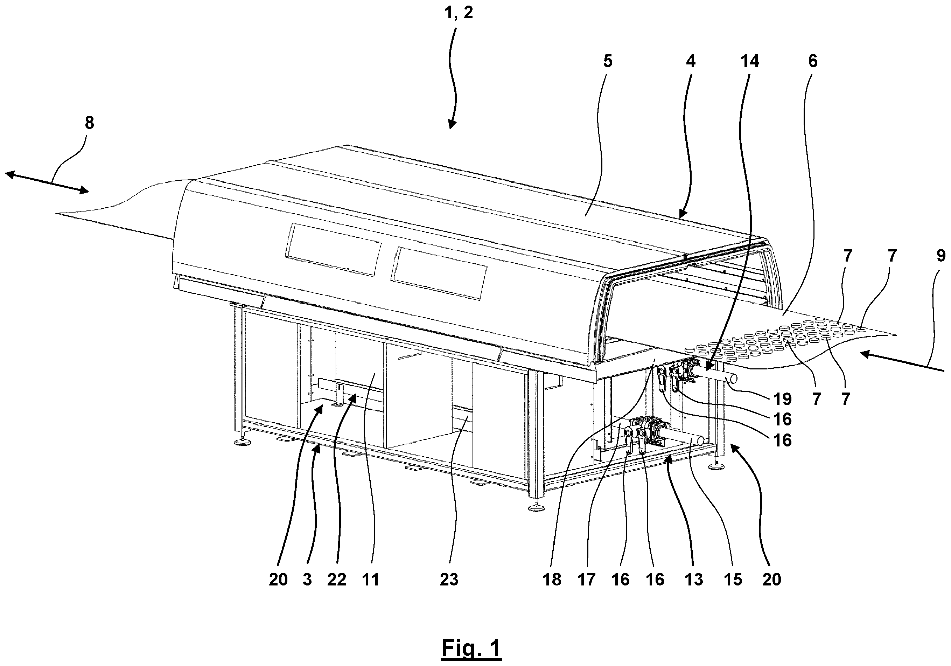

**Fig. 1** zeigt eine perspektivische Ansicht einer beispielhaften Ausführungsform einer neuen Nahrungsmittelverarbeitungsmaschine 1. Im vorliegenden Fall ist die Nahrungsmittelverarbeitungsmaschine 1 als Kühlkanal 2 ausgebildet. Es könnte sich aber auch um eine andere Art einer Nahrungsmittelverarbeitungsmaschine 1 handeln.

Die Nahrungsmittelverarbeitungsmaschine 1 weist ein Unterteil 3 und ein Oberteil 4 auf. Im vorliegenden Beispiel findet die temperaturmäßige Behandlung der Nahrungsmittelprodukte 7 im Bereich des Oberteils 4 statt. Andere Anordnungen wären aber ebenfalls möglich.

Das Oberteil 4 weist ein haubenförmiges Gehäuse 5 auf, welches den eigentlichen Temperierraum des Kühlkanals 2 bildet. Mit einem Fördermittel 6 werden die auf diesem aufliegenden Nahrungsmittelprodukte 7 in einer Förderrichtung 8 durch den Kühlkanal 2 gefördert. Im vorliegenden Fall erfolgt das Fördern in einem in der Förderrichtung 8 verlaufenden Förderrichtungssinn 9 von rechts nach links. Der Förderrichtungssinn 9 könnte aber auch entgegengesetzt sein.

Das Unterteil 3 weist ebenfalls ein Gehäuse 10 auf. Dieses Gehäuse 10 kann als separates Gehäuse zu dem Gehäuse 5 angesehen werden. Es ist aber auch möglich, die Gehäuse 5, 10 als ein gemeinsames Gehäuse anzusehen. In dem Gehäuse 10 ist ein Wärmetauscher 11 angeordnet, der in für sich genommen bekannter Weise zum Bereitstellen der zum Betreiben des Kühlkanals 2 erforderlichen Wärmemenge ausgebildet und angeordnet ist.

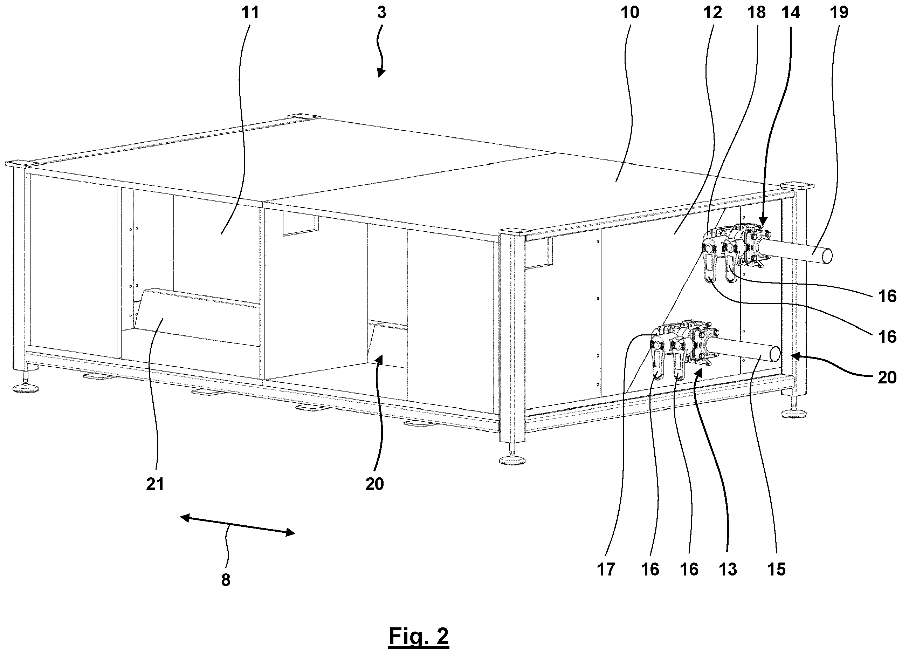

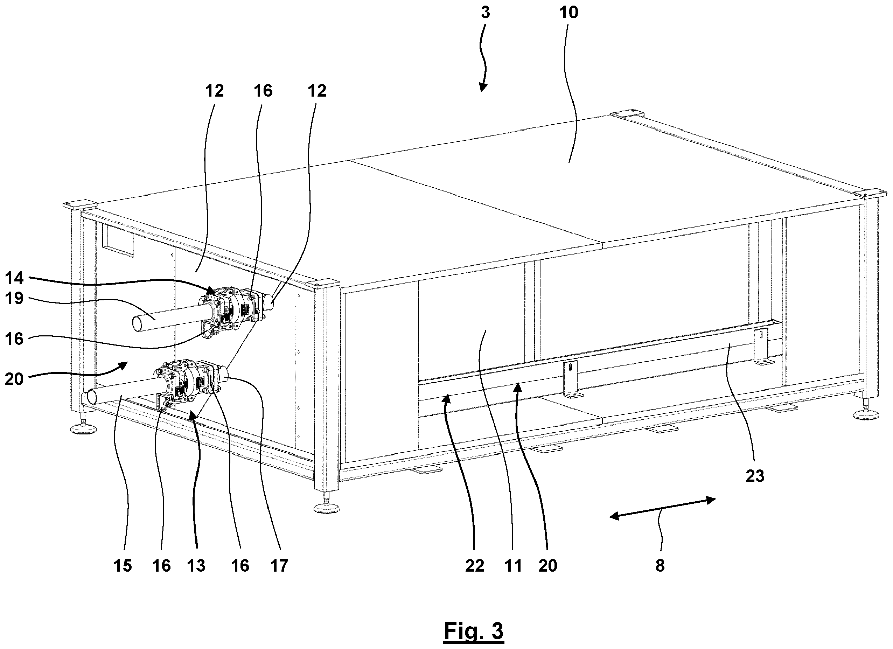

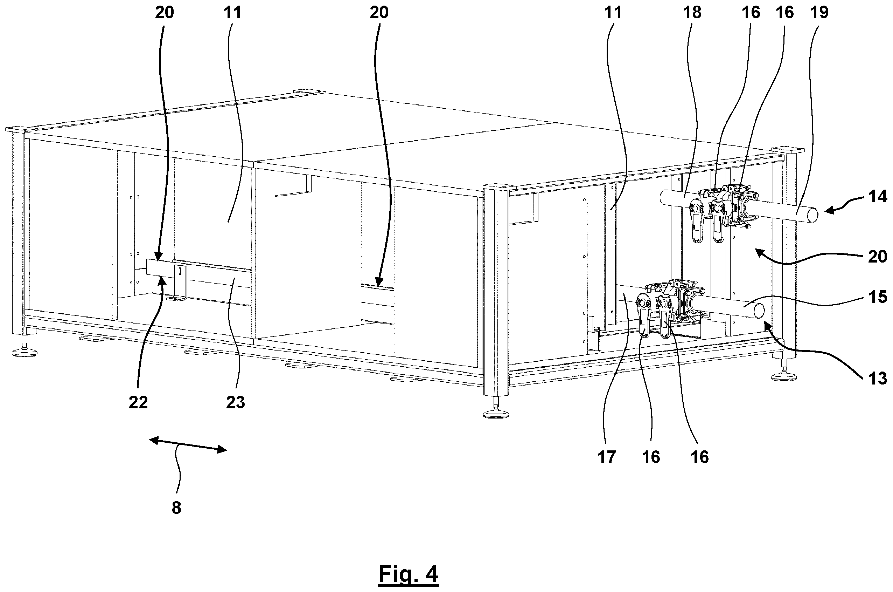

Die weiteren Details des Unterteils 3 werden nun unter Bezugnahme auf die dieses darstellenden **Fig. 2-4** weiter erläutert. In den Fig. 2, 3 ist dabei eine Stirnseitenabdeckungsplatte 12 vorhanden, während diese in der Abbildung gemäß Fig. 4 entfernt wurde, wodurch der Wärmetauscher 11 besser sichtbar ist.

Der Wärmetauscher 11 weist einen Eingang 13 und einen Ausgang 14 für ein durch den Wärmetauscher 11 strömendes Fluid, insbesondere Wasser, auf. Im Bereich des Eingangs 13 ist eine Zuführleitung 15 für das Fluid angeordnet. Endseitig an der Fluidleitung 15 ist eine Schnellkupplung 16 angeordnet. Die Schnellkupplung 16 ist als tropffreie Kupplung ausgebildet. Eine korrespondierende Schnellkupplung 16 ist endseitig an dem Wärmetauscher-Zuführleitungsabschnitt 17 angeordnet.

Eine vergleichbare Konstellation findet sich auch im Bereich des Ausgangs 14. Dort führt ein Wärmetauscher-Rückführleitungsabschnitt 18 über zwei weitere Schnellkupplungen 16 zu der Rückführleitung 19.

Die Schnellkupplungen 16 sind Teil einer neuen Schnellwechseleinrichtung 20 für den Wärmetauscher 11. Weitere Teile der Schnellwechseleinrichtung 20 werden unterhalb beschrieben. Durch die Schnellwechseleinrichtung 20 kann der Wärmetauscher 11 in einfacher und schneller Weise aus der Nahrungsmittelverarbeitungsmaschine 1 - insbesondere für eine Reinigung - entfernt und später wieder mit dieser verbunden werden.

Weitere Teile der Schnellwechseleinrichtung 20 sind in Fig. 1, 3 und 4 erkennbar. In Fig. 2 sind diese nicht erkennbar, da sie dort durch ein Luftführungsblech 21 verdeckt sind.

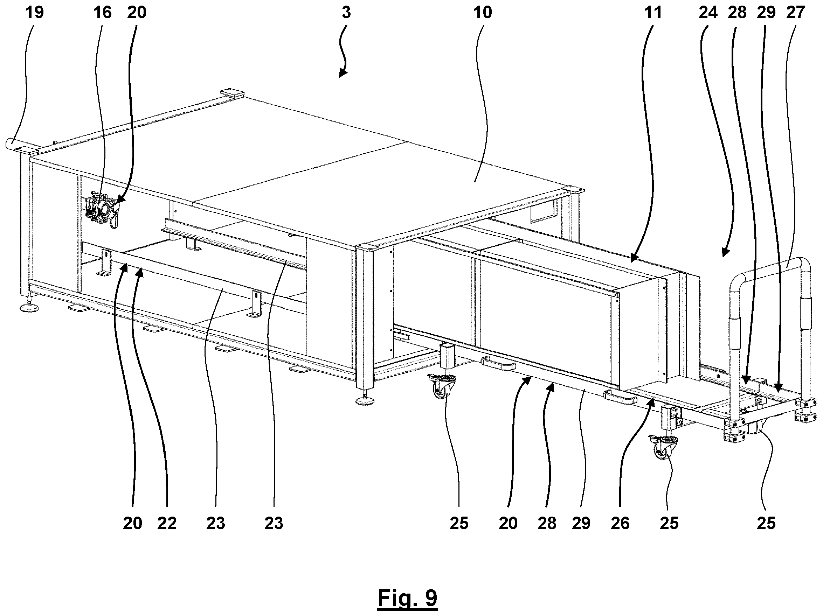

Die Schnellwechseleinrichtung 20 weist eine in dem Gehäuse 10 des Unterteils 3 angeordnete erste Schieneneinrichtung 22 auf. Die erste Schieneneinrichtung 22 weist zwei jeweils L-förmig ausgebildete Schienen 23 auf. Die Schienen 23 sind am einfachsten in **Fig. 9** erkennbar. Dort ist auch am besten erkennbar, wie der Wärmetauscher 11 zwischen den Schienen 23 entlang deren Haupterstreckungsrichtung ( = Förderrichtung 8) beweglich aufgenommen ist.

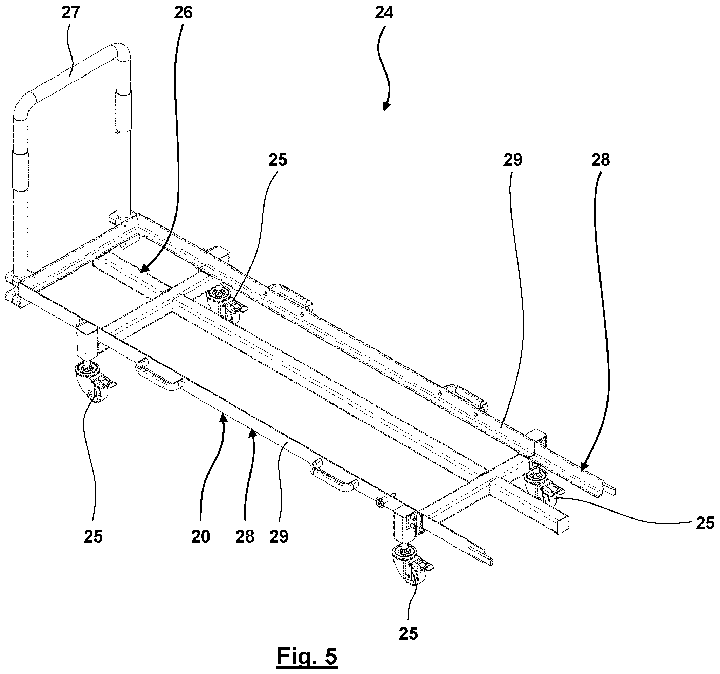

Die Nahrungsmittelverarbeitungsmaschine 1 weist weiterhin einen Servicewagen 24 auf bzw. ist mit einem solchen Servicewagen 24 kombinierbar, wie er beispielsweise in **Fig. 5** dargestellt ist. Der Servicewagen 24 ist an die Abmaße des Unterteils 3, der Schnellwechseleinrichtung 20 und des Wärmetauschers 11 der Nahrungsmittelverarbeitungsmaschine 1 angepasst. Der Servicewagen 24 weist eine Mehrzahl von Rolleneinheiten 25 auf, bei denen es sich um Lenkrollen handelt. Es könnte sich aber auch teilweise um Bockrollen handelt. Über die Rolleneinheiten 25 ist der Rahmen 26 des Servicewagens 24 auf dem Boden abgestützt und über diesen verfahrbar. An dem Rahmen 26 ist ein Bediengriff 27 angeordnet. Der Bediengriff 27 ist in diesem Fall zusammenklappbar ausgebildet, damit das Einfahren mit dem Servicewagen 24 unter das Oberteil 4 der Nahrungsmittelverarbeitungsmaschine 1 möglich ist.

Der Servicewagen 24 bildet ein weiteres Teil der Schnellwechseleinrichtung 20. Hierfür weist der Servicewagen 24 eine zweite Schieneneinrichtung 28 auf, die passend zu der ersten Schieneneinrichtung 22 ausgebildet ist. Die zweite Schieneneinrichtung 28 weist ebenfalls zwei L-förmig ausgebildete und beabstandet zueinander angeordnete Schienen 29 auf. Das Zusammenwirken der Schieneneinrichtungen 22, 28 wird weiter unterhalb beschrieben.

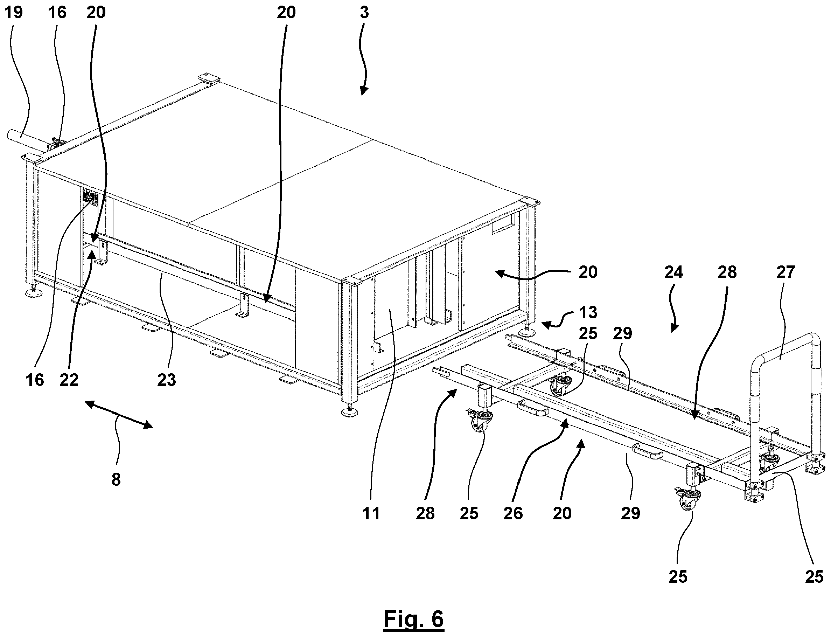

Die Wirkungsweise der neuen Schnellwechseleinrichtung 20 und die mit dieser realisierte Demontage und Montage des Wärmetauschers 11 wird nun unter Bezugnahme auf **Fig. 6-11** weiter beschrieben. In Fig. 6 ist dabei eine erste Stellung relativ am Anfang der Demontage des Wärmetauschers 11 dargestellt. Die Stirnseitenabdeckungsplatte 12 wurde bereits entfernt. Der Wärmetauscher 11 befindet sich noch vollständig innerhalb des Gehäuses 10. Der Servicewagen 4 wird auf das Unterteil 3 zubewegt.

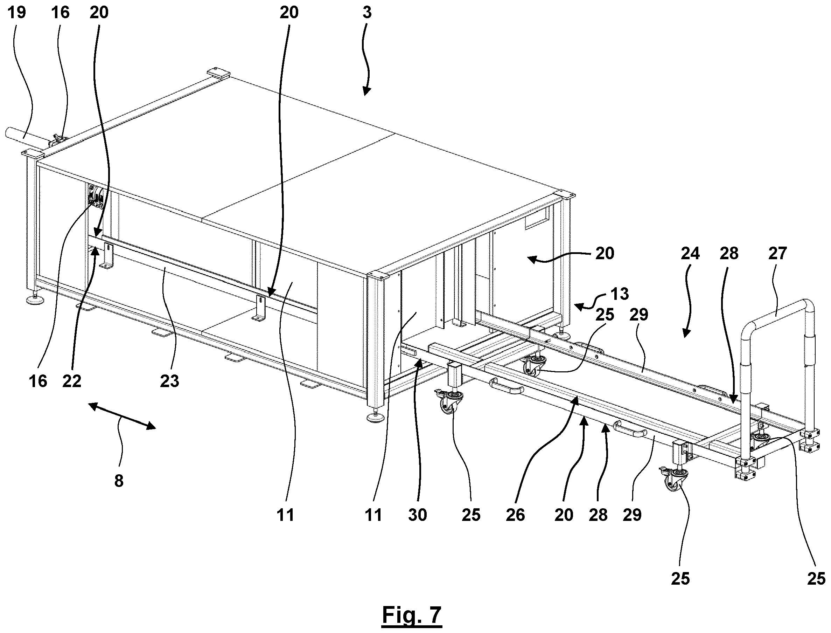

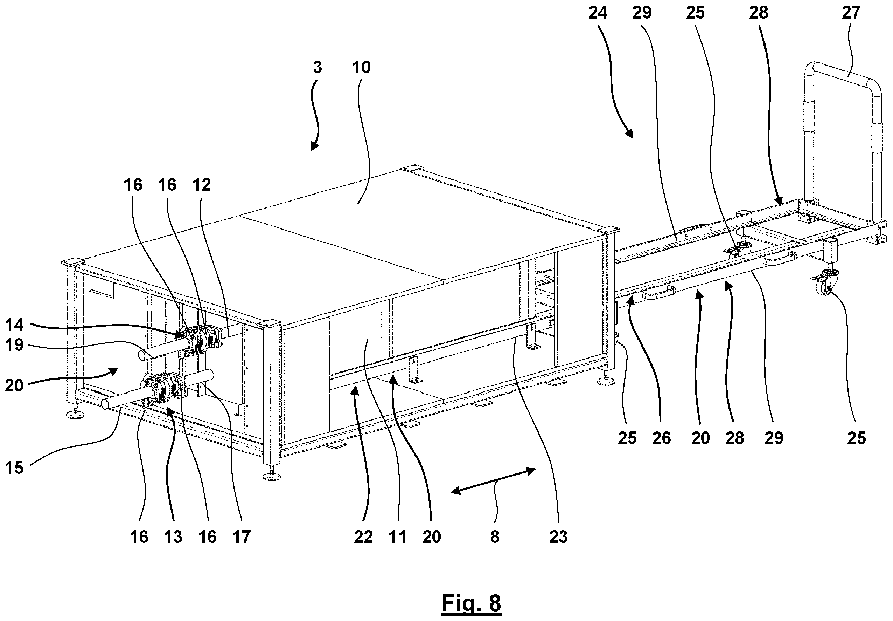

Die nächste Stellung ist in Fig. 7 dargestellt. Der Servicewagen 4 wurde nun weiter auf das Unterteil 3 zubewegt und mit diesem in Kontakt gebracht. Die beiden Schieneneinrichtungen 22 und 28 wurden durch ein Schieneneinrichtungsverbindungsmittel miteinander verbunden. Das Schieneneinrichtungsverbindungsmittel ist auf beiden Seiten (links und rechts) als Sicherungsstift (nicht dargestellt) ausgebildet, der jeweils in eine Bohrung eingreift, die sich durch einen überlappenden Bereich der Schienen 22, 28 erstreckt. Dadurch wurde eine zusammenhängende Schieneneinrichtungseinheit 30 geschaffen. Die gleiche Konstellation ist auch in Fig. 8 von der anderen Seite gesehen dargestellt. Nun werden auf der dem Servicewagen 24 gegenüberliegenden Längsseite des Unterteils 3 die Schnellkupplungen 16 geöffnet.

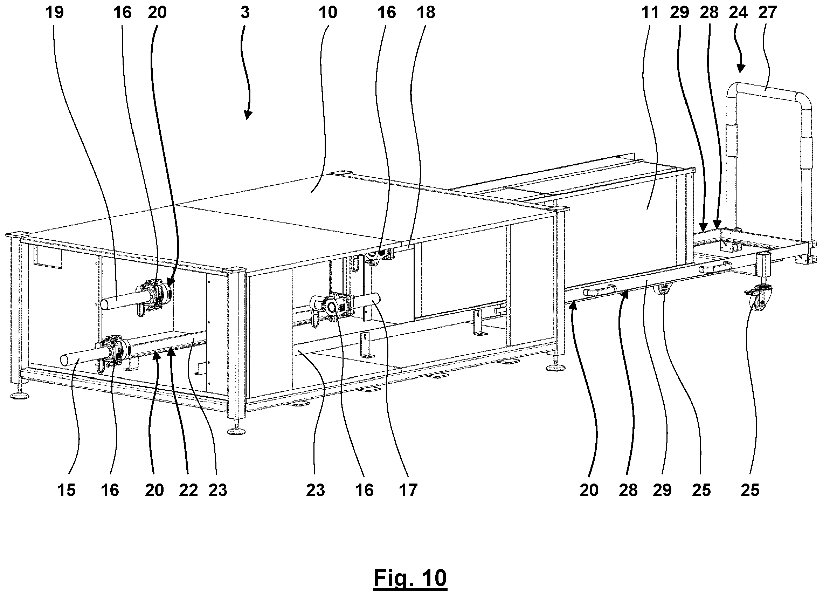

Wie in Fig. 9 und 10 erkennbar ist, kann der Wärmetauscher 11 nun entlang der Schieneneinrichtungseinheit 30 vom Bediener auf den Servicewagen 24 gezogen werden. Hierfür weist der Wärmetauscher 11 eine Mehrzahl von Handgriffen und eine Mehrzahl von Rollen 31 - hier: vier Rollen 31 - auf, durch die der Wärmetauscher 11 auf den Schienen 23, 29 rollbar gelagert ist. Somit ist der Wärmetauscher 11 definiert in der Förderrichtung 8 relativ zu dem Gehäuse 10 beweglich gelagert. Die Schnellkupplungen 16 des Wärmetauschers verbleiben dabei an dem Wärmetauscher 11, während die korrespondierenden Schnellkupplungen 16 an der Zuführleitung 15 und der Rückführleitung 18 verbleiben.

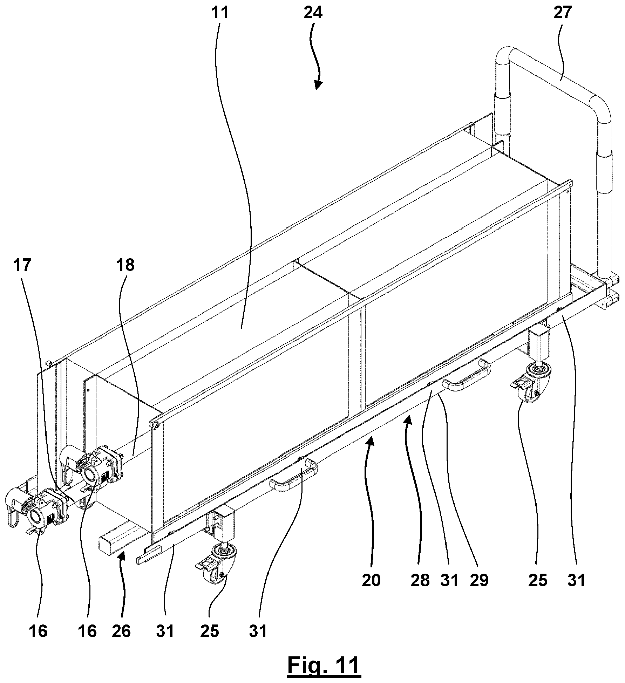

Wenn der Wärmetauscher 11 vollständig aus der Nahrungsmittelverarbeitungsmaschine 1 entfernt und auf dem Servicewagen 24 abgelegt wurde, ergibt sich die in Fig. 11 gezeigte Konstellation. Der Wärmetauscher 11 wird mittels der Sicherungsstifte auf dem Servicewagen 24 gesichert. Nun kann der auf dem Servicewagen 24 sicher aufliegende Wärmetauscher 11 durch den Bediener an einen anderen Ort für eine Reinigung, Wartung und/oder Reparatur des Wärmetauschers 11 verfahren werden.

In der entsprechend umgekehrten Reihenfolge erfolgt dann später die Montage des gereinigten, gewarteten und/oder reparierten Wärmetauschers 11 oder eines neuen Wärmetauschers 11 in der Nahrungsmittelverarbeitungsmaschine 1.

### BEZUGSZEICHENLISTE

- 1: Nahrungsmittelverarbeitungsmaschine
- 2: Kühlkanal
- 3: Unterteil
- 4: Oberteil
- 5: Gehäuse
- 6: Fördermittel
- 7: Nahrungsmittelprodukt
- 8: Förderrichtung
- 9: Förderrichtungssinn
- 10: Gehäuse
- 11: Wärmetauscher
- 12: Stirnseitenabdeckungsplatte
- 13: Eingang
- 14: Ausgang
- 15: Zuführleitung
- 16: Schnellkupplung
- 17: Wärmetauscher-Zuführleitungsabschnitt
- 18: Wärmetauscher-Rückführleitungsabschnitt
- 19: Rückführleitung
- 20: Schnellwechseleinrichtung
- 21: Luftführungsblech
- 22: erste Schieneneinrichtung
- 23: Schiene
- 24: Servicewagen
- 25: Rolleneinheit
- 26: Rahmen
- 27: Bediengriff
- 28: zweite Schieneneinrichtung
- 29: Schiene
- 30: Schieneneinrichtungseinheit
- 31: Rolle

## Patentansprüche

1. Nahrungsmittelverarbeitungsmaschine (1) mit einem Gehäuse (10) und einem in dem Gehäuse (10) angeordneten Wärmetauscher (11) zum temperaturmäßigen Behandeln von Nahrungsmittelprodukten (7) in der Nahrungsmittelverarbeitungsmaschine (1), wobei der Wärmetauscher (11) einen Eingang (13) und einen Ausgang (14) für ein durch den Wärmetauscher (11) strömendes Fluid aufweist, **gekennzeichnet durch** eine Schnellwechseleinrichtung (20) für den Wärmetauscher (11), die so ausgebildet ist, dass durch ihre Betätigung der Wärmetauscher (11) von der Nahrungsmittelverarbeitungsmaschine (1) trennbar und später wieder mit dieser verbindbar ist, wobei der Eingang (13) des Wärmetauschers (11) mittels einer ersten Schnellkupplung (16) mit einer Zuführleitung (15) und der Ausgang (14) des Wärmetauschers (11) mittels einer zweiten Schnellkupplung (16) mit einer Rückführleitung (19) verbunden ist, wobei die erste Schnellkupplung (16) und die zweite Schnellkupplung (16) Teil der Schnellwechseleinrichtung (20) sind.

2. Nahrungsmittelverarbeitungsmaschine (1) nach Anspruch 1, **gekennzeichnet durch** ein Fördermittel (6), mit dem die Nahrungsmittelprodukte (7) in einer Förderrichtung (8) durch die Nahrungsmittelverarbeitungsmaschine (1) gefördert werden.

3. Nahrungsmittelverarbeitungsmaschine (1) nach Anspruch 2, **dadurch gekennzeichnet, dass** der Wärmetauscher (11) in der Förderrichtung (8) aus dem Gehäuse (10) entfernbar ausgebildet und angeordnet ist.

4. Nahrungsmittelverarbeitungsmaschine (1) nach Anspruch 2 oder 3, **dadurch gekennzeichnet, dass** der Wärmetauscher (11) eine Mehrzahl von Rollen (31) aufweist, mittels derer der Wärmetauscher (11) in der Förderrichtung (8) relativ zu dem Gehäuse (10) beweglich gelagert ist.

5. Nahrungsmittelverarbeitungsmaschine (1) nach mindestens einem der vorhergehenden Ansprüche, **dadurch gekennzeichnet, dass** die Schnellwechseleinrichtung (20) so ausgebildet ist, dass der Wärmetauscher (11) werkzeuglos von dem Gehäuse (10) trennbar und mit diesem verbindbar ist.

6. Nahrungsmittelverarbeitungsmaschine (1) nach mindestens einem der vorhergehenden Ansprüche, **dadurch gekennzeichnet, dass** die Schnellwechseleinrichtung (20) eine in dem Gehäuse (10) angeordnete Schieneneinrichtung (22) aufweist, entlang derer der Wärmetauscher (11) beweglich ist.

7. Nahrungsmittelverarbeitungsmaschine (1) nach Anspruch 6, **dadurch gekennzeichnet, dass** die Schieneneinrichtung (22) zwei Schienen (23) aufweist.

8. Nahrungsmittelverarbeitungsmaschine (1) nach Anspruch 7, **dadurch gekennzeichnet, dass** die Schienen (23) L-förmig ausgebildet sind und der Wärmetauscher (11) zwischen den Schienen (23) aufgenommen ist.

9. Nahrungsmittelverarbeitungsmaschine (1) nach mindestens einem der vorhergehenden Ansprüche, **gekennzeichnet durch** einen Servicewagen (24), der zur Aufnahme und zum Transport des Wärmetauschers (11) ausgebildet ist.

10. Nahrungsmittelverarbeitungsmaschine (1) nach Anspruch 9, **dadurch gekennzeichnet, dass**
die Schnellwechseleinrichtung (20) eine in dem Gehäuse (10) angeordnete erste Schieneneinrichtung (22) aufweist,
der Servicewagen (24) eine zweite Schieneneinrichtung (28) aufweist, die passend zu der ersten Schieneneinrichtung (22) ausgebildet ist, wobei der Wärmetauscher (11) entlang der ersten Schieneneinrichtung (22) und der zweiten Schieneneinrichtung (28) beweglich ist.

11. Nahrungsmittelverarbeitungsmaschine (1) nach mindestens einem der vorhergehenden Ansprüche, **dadurch gekennzeichnet, dass** das Fluid Wasser ist.

12. Nahrungsmittelverarbeitungsmaschine (1) nach mindestens einem der vorhergehenden Ansprüche, **dadurch gekennzeichnet, dass** die erste Schnellkupplung (16) und die zweite Schnellkupplung (16) als tropffreie Kupplungen ausgebildet sind.

13. Nahrungsmittelverarbeitungsmaschine (1) nach mindestens einem der vorhergehenden Ansprüche, **dadurch gekennzeichnet, dass** die Nahrungsmittelverarbeitungsmaschine (1) als Kühlkanal (2) ausgebildet ist und es sich bei den Nahrungsmittelprodukten (7) um Süßwarenprodukte handelt.

14. Kombination aus einer Nahrungsmittelverarbeitungsmaschine (1) mit einem Wärmetauscher (11) nach mindestens einem der vorhergehenden Ansprüche und einem Servicewagen (24) zur Aufnahme und zum Transport des Wärmetauschers (11), **dadurch gekennzeichnet, dass**
die Nahrungsmittelverarbeitungsmaschine (1) eine erste Schieneneinrichtung (22) aufweist,
der Servicewagen (24) eine zweite Schieneneinrichtung (28) aufweist, die passend zu der ersten Schieneneinrichtung (22) ausgebildet ist, wobei der Wärmetauscher (11) entlang der ersten Schieneneinrichtung (22) und der zweiten Schieneneinrichtung (28) und somit zwischen der Nahrungsmittelverarbeitungsmaschine (1) und dem Servicewagen (24) beweglich ist.

## Claims

1. Food processing machine (1) comprising a housing (10) and a heat exchanger (11) arranged in the housing (10) for a thermal treatment of food products (7) in the food processing machine (1), the heat exchanger (11) comprising an inlet (13) and an outlet (14) for a fluid streaming through the heat exchanger (11), **characterized by** a quick exchange device (20) for the heat exchanger (11) being designed such that by its actuation the heat exchanger (11) can be separated from the food processing machine (1) and can at a later point in time again be connected to the same, the inlet (13) of the heat exchanger (11) being connected by a first quick connection (16) to a supply line (15) and the outlet (14) of the heat exchanger (11) being connected by a second quick connection (16) to a return line (19), the first quick connection (16) and the second quick connection (16) being part of the quick exchange device (20).

2. Food processing machine (1) of claim 1, **characterized by** a conveying means (6) by which it is possible to convey food products (7) in a conveying direction (8) through the food processing machine (1).

3. Food processing machine (1) of claim 2, **characterized in that** the heat exchanger (11) is designed and arranged for being removable out of the housing (10) in the conveying direction (8).

4. Food processing machine (1) of claim 2 or 3, **characterized in that** the heat exchanger (11) comprises a plurality of rollers (31) by which the heat exchanger (11) is supported for being moved in the conveying direction (18) relative to the housing (10).

5. Food processing machine (1) of at least one of the preceding claims, **characterized in that** the quick exchange device (20) is designed such that the heat exchanger (11) can be separated from the housing (10) and can be connected to the same without the use of a tool.

6. Food processing machine (1) of at least one of the preceding claims, **characterized in that** the quick exchange device (20) comprises a rail device (22) arranged in the housing (10), the heat exchanger (11) being moveable along the rail device (22).

7. Food processing machine (1) of claim 6 **characterized in that** the rail device (22) comprises two rails (23).

8. Food processing machine (1) of claim 7, **characterized in that** the rails (23) are L-shaped and the heat exchanger (11) is accommodated between the rails (23).

9. Food processing machine (1) of at least one of the preceding claims, **characterized by** a service carriage (24) which is designed for the accommodation and for the transport of the heat exchanger (11).

10. Food processing machine (1) of claim 9, **characterized in that**
the quick exchange device (20) comprises a first rail device (20) arranged in the housing (10),
the service carriage (24) comprises a second rail device (28) designed corresponding to the first rail device (22), the heat exchanger (11) being moveable along the first rail device (22) and the second rail device (28).

11. Food processing machine (1) of at least one of the preceding claims, **characterized in that** the fluid is water.

12. Food processing machine (1) of at least one of the preceding claims, **characterized in that** the first quick connection (16) and the second quick connection (16) are embodied as drop-free or non-leaking connections.

13. Food processing machine (1) of at least one of the preceding claims, **characterized in that** the food processing machine (1) is embodies as a cooling channel (2) and the food products (7) are confectionary products.

14. Combination of a food processing machine (1) with a heat exchanger (11) of at least one of the preceding claims and a service carriage (24) for the accommodation and the transport of the heat exchanger (11), **characterized in that**
the food processing machine (1) comprises a first rail device (22),
the service carriage (24) comprises a second rail device (28) being designed corresponding to the first rail device (22), the heat exchanger (11) being moveable along the first rail device (22) and the second rail device (28) and so between the food processing machine (1) and the service carriage (24).

## Revendications

1. Machine de traitement de produits alimentaires (1) avec un boîtier (10) et un échangeur thermique (11) disposé dans le boîtier (10), pour le traitement thermique de produits alimentaires (7) dans la machine de traitement de produits alimentaires (1), dans laquelle l'échangeur thermique (11) comprend une entrée (13) et une sortie (14) pour un fluide s'écoulant à travers l'échangeur thermique (11), **caractérisée par** un dispositif de changement rapide (20) pour l'échangeur thermique (11), qui est conçu de sorte que, du fait de son actionnement, l'échangeur thermique (11) peut être séparé de la machine de traitement de produits alimentaires (1) et relié à nouveau plus tard avec celle-ci, dans laquelle l'entrée (13) de l'échangeur thermique (11) est reliée, au moyen d'un premier couplage rapide (16), avec une conduite d'alimentation (15) et la sortie (14) de l'échangeur thermique (11) est reliée, au moyen d'un deuxième couplage rapide (16), avec une conduite de retour (19), dans laquelle le premier couplage rapide (16) et le deuxième couplage rapide (16) font partie du dispositif de changement rapide (20).

2. Machine de traitement de produits alimentaires (1) selon la revendication 1, **caractérisée par** un moyen de convoyage (6) avec lequel les produits alimentaires (7) sont convoyés, dans un dispositif de convoyage (8), à travers la machine de traitement de produits alimentaires (1).

3. Machine de traitement de produits alimentaires (1) selon la revendication 2, **caractérisée en ce que** l'échangeur thermique (11) est réalisé et disposé dans le dispositif de convoyage (8) de façon à pouvoir être retiré du boîtier (10).

4. Machine de traitement de produits alimentaires (1) selon la revendication 2 ou 3, **caractérisée en ce que** l'échangeur thermique (11) comprend une pluralité de rouleaux (31) au moyen desquels l'échangeur thermique (11) est logé de manière mobile par rapport au boîtier (10) dans le dispositif de convoyage (8).

5. Machine de traitement de produits alimentaires (1) selon au moins l'une des revendications précédentes, **caractérisée en ce que** le dispositif de changement rapide (20) est conçu de sorte que l'échangeur thermique (11) peut être séparé du boîtier (10) et à nouveau relié avec celui-ci sans outil.

6. Machine de traitement de produits alimentaires (1) selon au moins l'une des revendications précédentes, **caractérisée en ce que** le dispositif de changement rapide (20) comprend un dispositif à glissières (22), disposé dans le boîtier (10), le long duquel l'échangeur thermique (11) est mobile.

7. Machine de traitement de produits alimentaires (1) selon la revendication 6, **caractérisée en ce que** le dispositif à glissières (22) comprend deux glissières (23).

8. Machine de traitement de produits alimentaires (1) selon la revendication 7, **caractérisée en ce que** les glissières (23) présentent une forme de L et l'échangeur thermique (11) est logé entre les glissières (23).

9. Machine de traitement de produits alimentaires (1) selon au moins l'une des revendications précédentes, **caractérisée par** un chariot de service (24) qui est conçu pour le logement et le transport de l'échangeur thermique (11).

10. Machine de traitement de produits alimentaires (1) selon la revendication 9, **caractérisée en ce que**
le dispositif de changement rapide (20) comprend un premier dispositif à glissières (22), disposé dans le boîtier (10),
le chariot de service (24) comprend un deuxième dispositif à glissières (28) qui est réalisé de manière correspondante au premier dispositif à glissières (22), dans laquelle l'échangeur thermique (11) est mobile le long du premier dispositif à glissières (22) et du deuxième dispositif à glissières (28).

11. Machine de traitement de produits alimentaires (1) selon au moins l'une des revendications précédentes, **caractérisée en ce que** le fluide est de l'eau.

12. Machine de traitement de produits alimentaires (1) selon au moins l'une des revendications précédentes, **caractérisée en ce que** le premier couplage rapide (16) et le deuxième couplage rapide (16) sont conçus comme des couplages sans gouttes.

13. Machine de traitement de produits alimentaires (1) selon au moins l'une des revendications précédentes, **caractérisée en ce que** la machine de traitement de produits alimentaires (1) est conçue comme un canal de refroidissement (2) et les produits alimentaires (7) sont des confiseries.

14. Combinaison d'une machine de traitement de produits alimentaires (1) avec un échangeur thermique (11) selon au moins l'une des revendications précédentes et un chariot de service (24) pour le logement et le transport de l'échangeur thermique (11), **caractérisée en ce que**
la machine de traitement de produits alimentaires (1) comprend un premier dispositif à glissières (22),
le chariot de service (24) comprend un deuxième dispositif à glissières (28) qui est réalisé de manière correspondante au premier dispositif à glissières (22), dans laquelle l'échangeur thermique (11) est mobile le long du premier dispositif à glissières (22) et du deuxième dispositif à glissières (28) et donc entre la machine de traitement de produits alimentaires (1) et le chariot de service (24).
